# EUROPEAN PATENT APPLICATION

(11) **EP 3 669 962 A1**
(43) Date of publication of application: **24.06.2020**
(21) Application number: 19217810.1
(22) Date of filing: 19.12.2019
(51) Int. Cl.: B01D 39/12

(54) **METAL FILTER WITH ANTIMICROBIAL ACTION**

(30) Priority: 19.12.2018 IT 201800020197
(71) Applicant: Alessandro Zambelli designstudio, 46013 Canneto Sull'Oglio (MN) (IT)
(72) Inventor: ZAMBELLI, Alessandro, 46013 CANNETO SULL'OGLIO (MN) (IT)
(74) Representative: Colombo, Stefano Paolo

(57) **Abstract**

The present invention relates to a metal filter for fluids. More particularly, it relates to a filter made of anodized metal, wherein said metal comprises a superficial porous layer of an oxide of said metal, comprising at least one antimicrobial substance, wherein said filter comprises a plurality of thread-like elements of said anodized metal, at least partially in non-permanent contact with each other, randomly deformed to form a plurality of non-linear pathways.

## Description

### FIELD OF THE INVENTION

The present invention relates to a metal filter for fluids. More particularly it relates to a filter made of aluminum, or aluminum alloys, which is anodized and has antimicrobial properties.

### STATE OF THE ART

A vast range of filtering systems and filters for fluids, such as water or air, are known in the art for domestic applications, in public places or industrial plants, such as for example air conditioning, extraction and/or recirculation systems, as well as sanitary and/or drinking water circulation systems.

There is the need in all these applications to separate the fluids from particles of varying size and nature, as well as from oily residues, for example from fumes produced during the cooking of food, or other undesirable substances.

Filters that are formed at least partly by metal grids, for example made of steel and/or aluminum, are known to be used for these applications.

Aluminum, in particular, is one of the most widely used metals in the world, being relatively economical, easy to machine and versatile. It is a lightweight metal yet has excellent durability and resistance to corrosion, high heat and electric conductivity and excellent malleability and ductility.

Aluminum is also a non-pyrophoric metal, does not pose particular problems of toxicity and can easily be combined with other metals to produce alloys. Finally, different treatments known in the art allow its properties, in particular resistance and hardness, and its appearance to be modified, using simple and economical processes.

Anodization, an irreversible electrolytic passivation treatment, is a process commonly used to increase the resistance to corrosion and to wear of various metals including aluminum and its alloys. This process involves the formation of a thin and non-removable layer of oxide on the surface of the treated metal. This layer, which penetrates the thickness of the metal at least partly, is porous in nature and therefore the anodized article must later be subjected to further treatments in order to seal the pores that have formed and, optionally, to obtain a particular coloring.

### SUMMARY OF THE INVENTION

In light of the above, the inventor has tackled the problem of providing a filter able to perform, in addition to a mechanical filtering action, also an effective antimicrobial action.

In this respect, the inventor has noted that in recent years post-anodization treatments have been developed, these being able to exploit the pores present in the surface layer of metal oxide in order to give the metal antimicrobial properties. After anodization, the metal is treated with substances having antimicrobial properties which fill the pores formed in the surface oxide layer. A subsequent sealing treatment ensures these substances remain on the surface of the treated metal, which therefore retains all the typical chemical and physical properties of the anodized metal, while at the same time gaining antimicrobial properties.

Treatments of this type carried out on substrates made of aluminum or its alloys are for example described in EP1207220B1 and WO2013155618.

The inventor has now found that, by using a metal subjected to antimicrobial anodization treatment, it is possible to obtain filters able to perform an efficient antimicrobial action.

According to the present invention, therefore, the aforementioned problem is solved by a metal filter, for example made of aluminum, or an aluminum alloy, anodized by means of an antimicrobial anodization treatment, said filter comprising a plurality of randomly deformed thread-like elements, said thread-like elements being at least partially in contact with each other so as to form a plurality of non-linear pathways, wherein said contact between two or more threads is of the non-permanent type.

Therefore, according to a first aspect, the present invention relates to a filter made of anodized metal, wherein said metal comprises a superficial porous layer of an oxide of said metal comprising at least one antimicrobial substance, wherein said filter comprises a plurality of thread-like elements of said anodized metal, at least partially in non-permanent contact with each other, randomly deformed to form a plurality of non-linear pathways.

According to a second aspect, the present invention relates to the use of the anodized metal filter as described above for removing particles and/or microorganisms from fluids.

### BRIEF DESCRIPTION OF THE DRAWINGS

The present invention will become fully clear from the following detailed description, given purely by way of a non-limiting example, to be read with reference to the accompanying drawings, in which:
Figure 1 shows eight sections of metal mesh, of different length and shaped differently, useful for assembling the filter according to a particular embodiment of the present invention;
Figure 2 shows a first assembling step of the filter according to an embodiment of the present invention;
Figure 3 shows a second assembling step of the filter according to an embodiment of the present invention;
Figures 4a and 4b show the final assembling step of the filter according to an embodiment of the present invention;
Figures 5a-d show the pressing process of the filter according to a particular embodiment of the present invention;
Figures 6a and 6b show, respectively, a reel of aluminum wire and a reel of aluminum mesh, useful for the purposes of the present invention;
Figures 7a-c show the filter according to one embodiment in three different views;
Figures 8.1, 8.2, 8.3 show the steps for obtaining a pad filter according to one variant;
Figure 9 shows, in partial section, an air extraction and recirculation motor equipped with a pad filter according to the present invention;
Figure 10 shows the results of the total bacterial count detected by the SAS sampler in the absence or in the presence of an air extraction and recirculation motor fitted with the filter according to the invention; and
Figures 11a-b show respectively the results of the total bacterial count detected by the SAS sampler placed in an angular or central position, in the absence or in the presence of an air extraction and recirculation motor equipped with the filter according to the invention.

### DETAILED DESCRIPTION OF THE INVENTION

### Definitions

In the present description and in the appended claims, the term "antimicrobial anodization" is understood as referring to any electrochemical anodization treatment, designed to form a porous layer of oxide on the surface of the treated metal, followed by treatment with antimicrobial substances deposited in the pores comprised in the aforementioned porous layer.

In the present description and in the appended claims, the term "thread-like element" will be used to denote an element in which the length is greater than the cross-section. The expression "thread-like element" for example will be used to denote a wire with a round cross section (or the like) or a flat strip. Said thread-like element is therefore characterized by a high "aspect ratio". The aspect ratio is the ratio between the longer dimension and the shorter dimension of a two-dimensional figure, but this concept can also be extended to three-dimensional geometric figures, choosing two characteristic dimensions of the solid figure. The "aspect ratio" of a thread-like element can therefore be defined as the ratio between its length and the diameter of the cross-section, assuming a round cross-section, or the smallest dimension of the cross-section.

In the present description and in the appended claims, the term "non-permanent contact" is understood as referring to the mutual relationship between thread-like elements. In particular, a non-permanent contact, for the purposes of the present description and claims, is a resting contact, optionally with interference. In this non-permanent contact, the thread-like elements are mainly in contact with each other without welds, adhesives, rivets, screws, ties or the like. A non-permanent contact can also be typically formed by means of deformation of the thread-like elements.

In the present description and in the appended claims, the term "randomly deformed", referred to the thread-like elements, is understood as referring to the thread-like elements when observed in the filter. A deformation is random when it has no evident periodicity. For example when observing a tangle of thread-like elements. This tangle of thread-like elements creates a plurality of pathways which are at least partly (and mainly) non-linear. In other words, observing the filter, a prevalence of linear paths created by the reciprocal position of the thread-like elements cannot be distinguished.

### Detailed description

According to a first aspect, the present invention relates to a filter made of anodized metal, wherein said metal comprises a superficial porous layer of an oxide of said metal comprising at least one antimicrobial substance, wherein said filter comprises a plurality of thread-like elements of said anodized metal, at least partially in non-permanent contact with each other, deformed randomly to form a plurality of non-linear pathways.

Preferably, said thread-like elements are deformed by means of a mechanical action, which may also be manual, until a disordered tangle comprising a plurality of non-linear pathways is obtained.

The formation in the filter of said plurality of non-linear pathways has as a result that of preventing the treated fluid from freely crossing the filter. In other words, a fluid that crosses the filter according to the present invention will be channeled along winding paths, resulting from the arrangement of said thread-like elements. These winding paths increase the contact between the treated fluid and the anodized metal comprising at least one antimicrobial substance, maximizing therefore the antimicrobial action of the present filter.

The filter according to the present invention may be made in a vast range of shapes, depending on the chosen application. In particular, with a greater compactness of the filter made and total surface area of the metal thread-like elements, a stronger filtering and antimicrobial action will be obtained.

Preferably, said thread-like elements are present in the form of woven elements, for examples sections of metal mesh, obtained from the weaving of the metal thread-like elements by means of appropriate equipment.

Methods for the production of woven metal elements are known in the art and the person skilled in the art will be able to use the method most suitable for the application required. In particular, said woven elements can be obtained in flat or tubular form.

Preferably, said woven elements are obtained from a tubular metal mesh, obtained by weaving metal wire by means of a rotor machine with needles, in which the size of the crushed tubular element ranges preferably from 100 to 150 mm.

Said metal mesh can be cut into sections of variable length, which are subsequently assembled depending on the shape of the filter to be made.

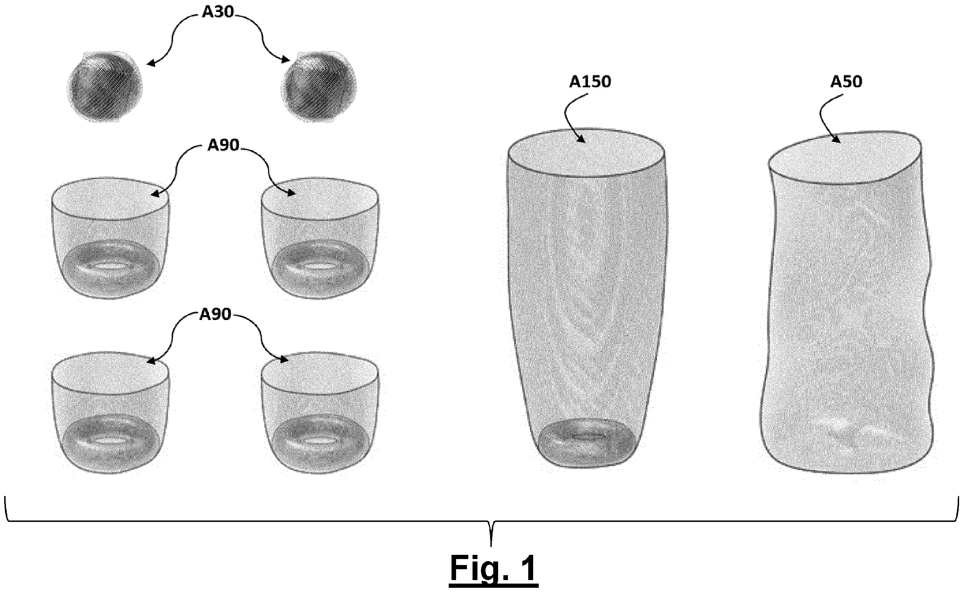

With reference to Figures 1, 2, 3 and 4, a description will now be given, purely by way of an example, of a method for making a filter 10 according to an embodiment of the present invention. In one particular embodiment, the filter 10 according to the present invention is made from eight sections of tubular metal mesh, shown in Figure 1: four sections with length 90 cm (denoted by reference numeral A90), one section with length 150 cm (denoted by reference numeral A150), two sections with length 30 cm (denoted by reference numeral A30), and one section with length 50 cm (denoted by reference numeral A50). The four sections A90 with length 90 cm are preferably rolled up like a sock, from the bottom upwards, to form a doughnut shape in the lower part of the tubular element, leaving the upper part thereof open.

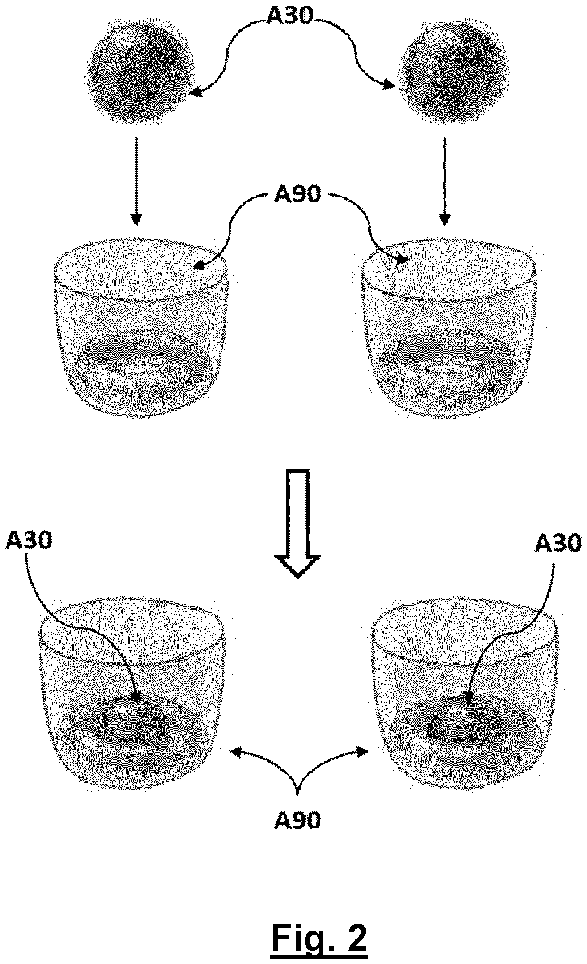

According to this embodiment, two of the four sections A90 rolled up like a sock are taken. Each hole formed in the two doughnuts obtained from the two sections A90 is filled with a rounded shape element obtained from the sections A30 with length 30 cm (Figure 2).

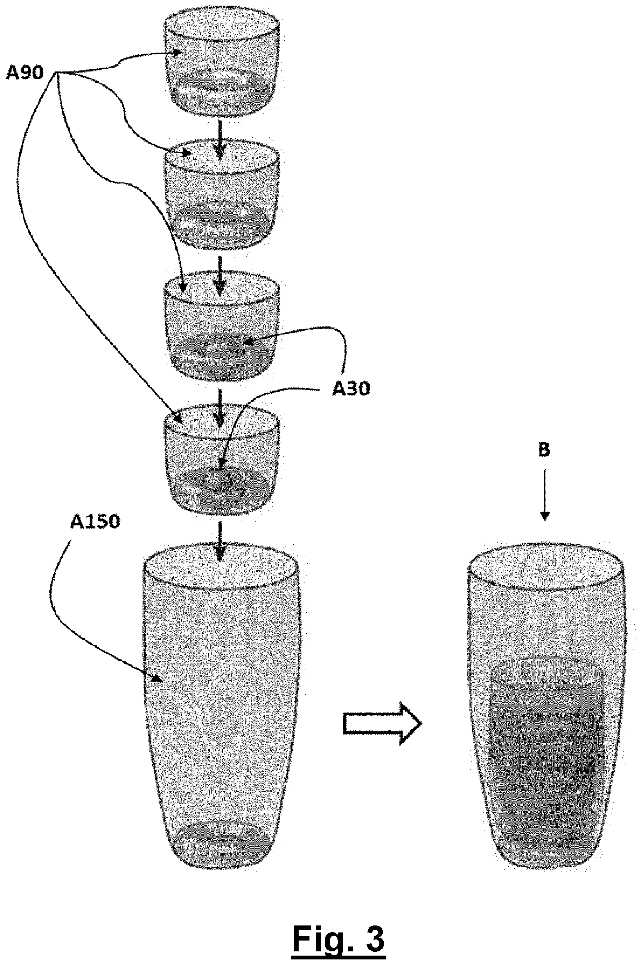

The other two sections A90 and the two assemblies A30+A90 obtained as mentioned above are stacked inside a larger doughnut obtained from section A150 with length 150 cm, rolled up in turn as described above so as to form a doughnut on the base (Figure 3). In this way a first assembly B is obtained.

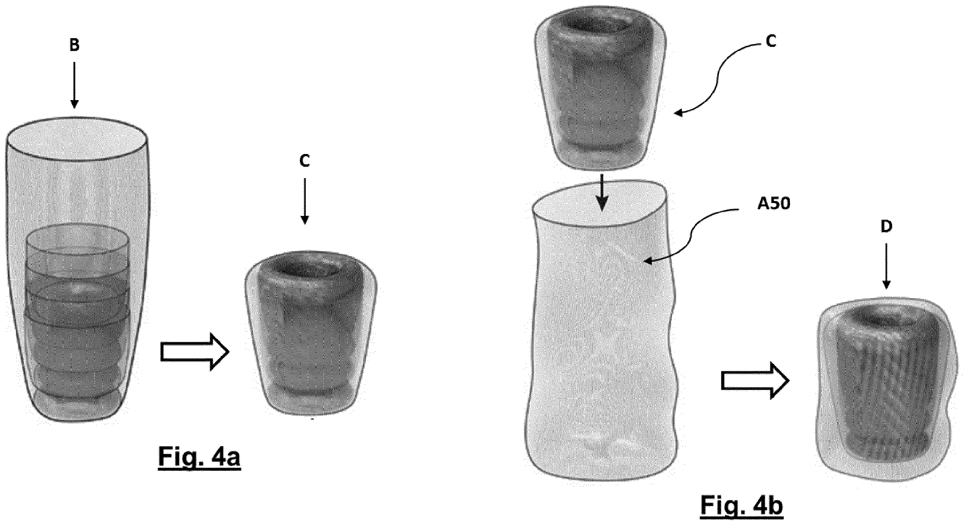

The upper part of the tubular element A150 of the first assembly B, empty as lacking the sections A90, is folded inside the hole obtained in this way to give a second assembly C (Figure 4a). Finally, one end of section A50 is knotted in the lower part of the tubular element and the second assembly C is placed in its interior, and the other end is folded inside the hole to give a third assembly D (Figure 4b).

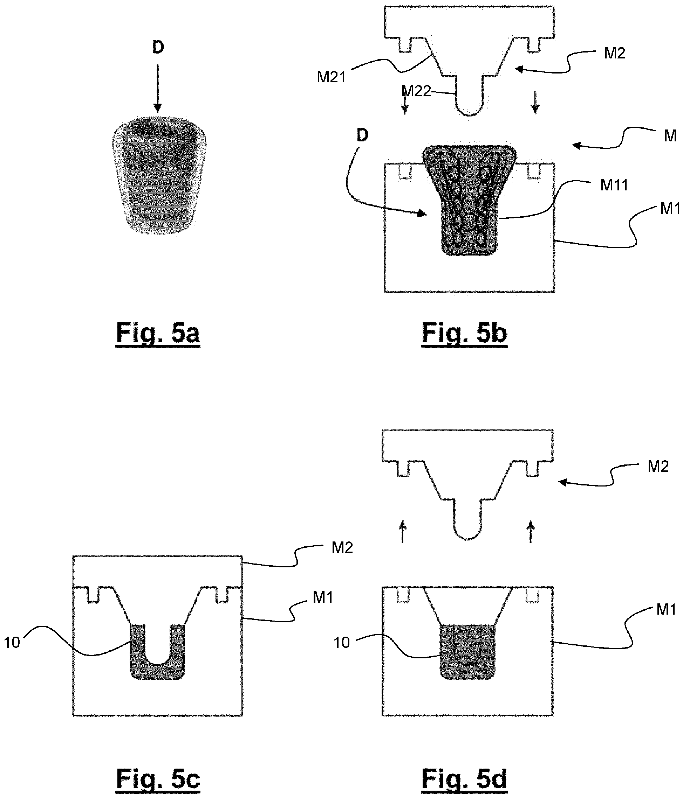

The metal mesh doughnut D made in this way is then placed in a mold and pressed (Figure 5). More particularly, the third assembly D (Figure 5a) is placed in a cavity M11 of a mold M (Figure 5b) comprising a male half-mold M1 and a female half-mold M2. Preferably the cavity M11 of the female half-mold comprises a substantially cylindrical base and a frustoconical upper part. The male half-mold comprises instead a frustoconical body M21 configured to engage in the upper frustoconical part of the cavity M11 and a protuberance M22 narrower and shorter than the substantially cylindrical base of the cavity M11.

The female half-mold M1 is closed with pressure (Figure 5c) together with the male half-mold M2. In this way a much more compact body of the third assembly D, substantially cylindrical in shape, crossed by a blind hole, is formed. After molding, the male and female half-molds are separated from one another (Figure 5d).

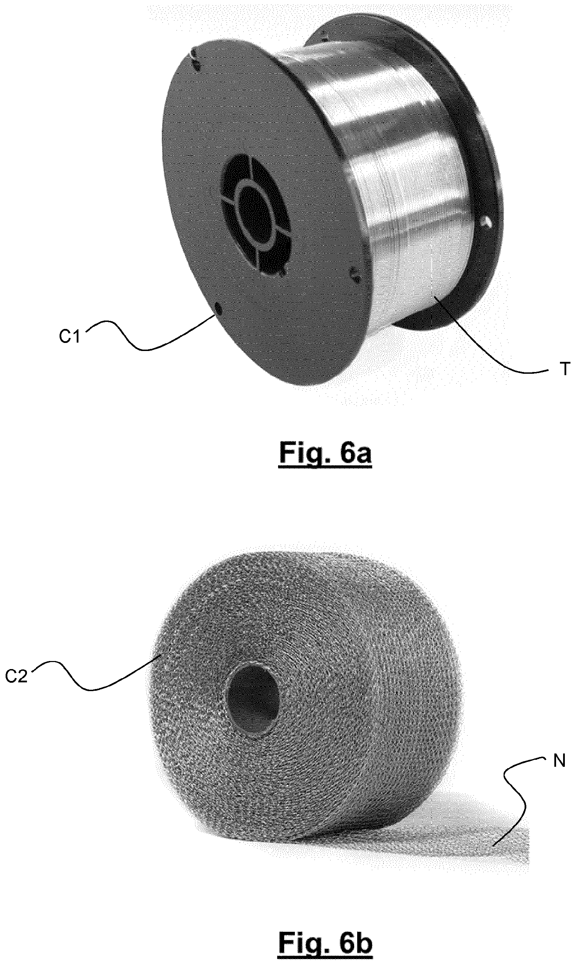

Figure 6a shows a first reel C1 of aluminum wire T and Figure 6b shows a second reel C2 of aluminum mesh N, useful for obtaining the filter 10 of the present invention, in particular the filter described above with reference to Figures 1-5.

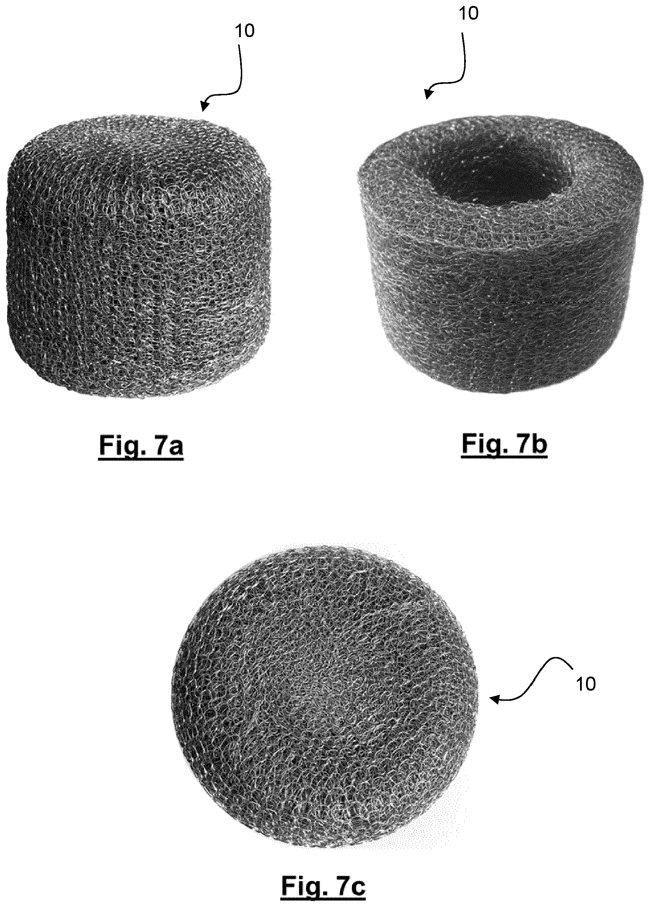

Figures 7a, 7b e 7c are three photos of a filter 10 made of aluminum mesh, for example obtained as described above with reference to Figures 1-5. According to the example embodiment shown in Figures 7, the filter 10 has the shape of a very compact doughnut characterized by an outer diameter of between about 120 mm and about 140 mm (preferably about 130 mm), an inner diameter of the hole between about 60 mm and about 80 mm (preferably about 70 mm), a total height between about 60 mm and about 80 mm (preferably about 70 mm), and an inner height of the hole between about 40 mm and about 60 mm (preferably about 50 mm). Naturally the shape could change depending on the purpose for which the filter 10 is to be used.

The material used for the filter 10 according to the present invention is preferably aluminum or an alloy thereof.

In a preferred embodiment, therefore, the present invention relates to a filter 10 made of an anodized aluminum or aluminum alloy mesh, wherein said aluminum comprises a superficial porous layer of aluminum oxide comprising at least one antimicrobial substance, wherein said filter 10 comprises a plurality of sections of said mesh, at least partially in non-permanent contact with each other, randomly deformed to form a plurality of non-linear pathways.

Said superficial porous layer extends at least partially inside the aluminum element and has a total thickness of about 2-40 µm, preferably 5-35 µm, even more preferably 10-20 µm. The pores present in the porous layer have a diameter preferably of between 5 nm and 100 nm.

Said superficial porous layer comprises at least one bactericidal substance, selected from silver ions, copper ions, antibiotics, antifungals and antivirals. In a particularly preferred embodiment, said superficial porous layer comprises silver ions.

Said antimicrobial substance is present inside said superficial porous layer in a sufficient quantity to guarantee the finished product an effective antimicrobial action. Preferably said antimicrobial substance occupies from 10% to 90% of the total volume of the pores present in said surface layer, calculated per unit of surface area.

Optionally, said superficial porous layer may also comprise a dye.

Said superficial porous layer comprising at least one antimicrobial substance is formed on the metal used in the present invention by means of an anodization process and an antimicrobial treatment, i.e. antimicrobial anodization.

This process of antimicrobial anodization may advantageously be carried out on the thread-like elements before or after deformation, as well as on the woven elements, or finally on the finished filter.

According to a particularly preferred aspect, the antimicrobial anodization process is carried out on the finished filter, before or after pressing. In this way it is possible to exploit, throughout the filter production process, the characteristics of the metal as such, more particularly the excellent machinability in the case of aluminum or aluminum alloy, which is typically reduced by the anodization process, and at the same time facilitate the antimicrobial anodization operations, carrying them out on smaller size parts, rather than on extensive lengths of wire or mesh, with consequent savings in terms of time and costs of the reagents required.

Advantageously, the anodization process and the antimicrobial treatment can be carried out in a single step or in two sequential steps. The anodization process and the antimicrobial treatment are preferably carried out in two sequential steps.

The process of anodization of metals and more particularly of aluminum, or alloys thereof, is well known in the art and any procedure able to form a superficial porous layer on the metal is useful for the purposes of the present invention. The person skilled in the art will be able to choose the most suitable anodization process.

Preferably the anodization process of aluminum or alloys thereof is carried out by immersing the article to be anodized in a bath containing an aqueous solution of sulfuric, oxalic or chromic acid, in a concentration of from 2% to 20% v/v. A current of 0.1-2 A/dm² is applied to the aluminum for a time sufficient to obtain a layer of the required thickness over the whole surface of the article, typically 10-60 minutes, at a temperature between 15°C and 50°C.

Post-anodization antimicrobial treatments are known in the art and any procedure able to deposit an antimicrobial substance inside the pores formed on the surface layer of oxide is useful for the purposes of the present invention.

For example the anodized aluminum may be immersed in a solution containing an appropriate quantity of the chosen antimicrobial substance, preferably in a concentration of from 0.01% and 99%, and kept in this solution for a period of time ranging from a few minutes to hours, at a temperature of between 25°C and 100°C. The person skilled in the art will be able to choose the most suitable antimicrobial treatment.

In a preferred embodiment, the antimicrobial substance consists of silver ions which are deposited by means of electrodeposition on the superficial porous layer formed during the anodization process. This electrodeposition takes place through the addition of a silver salt, typically silver nitrate, to the electrolytic bath used for anodization. Briefly, 1-50 g/L of silver nitrate are added to the electrolytic bath and a current of 5-20 V is applied for approximately 1-30 minutes. In this way silver ions, resulting from the silver nitrate used, are deposited inside the pores of the superficial porous layer of metal oxide.

Preferably, said superficial porous layer comprising at least one antimicrobial substance is at least partially sealed, namely a large part of its surface is sealed.

Advantageously the sealing operation may be carried out simultaneously with the antimicrobial treatment or at a later stage.

The sealing process is also well known to persons skilled in the art. For example, in the case of aluminum or alloys thereof, the sealing can be carried out by means of hydration of the aluminum oxide which forms the superficial porous layer. This hydration is carried out by immersing the aluminum in a bath of deionized water at 100°C for several hours, or by subjecting it to a treatment with steam with a high percentage of humidity for several hours.

Optionally the metal may be pretreated, before the anodization step, with chemical and/or mechanical treatments aimed at cleaning and finishing the metal part. Treatments known in the art are for example brushing, aimed at eliminating physical defects from the surface, degreasing, an operation necessary for obtaining a uniformly reactive surface, and pickling, a chemical treatment useful for removing greases, impurities and oxides which are already present and which may interfere with the formation of the anodic film.

Optionally it is possible to carry out a coloration or electro-coloration treatment. This treatment may be performed in any one of the steps of the antimicrobial anodization process.

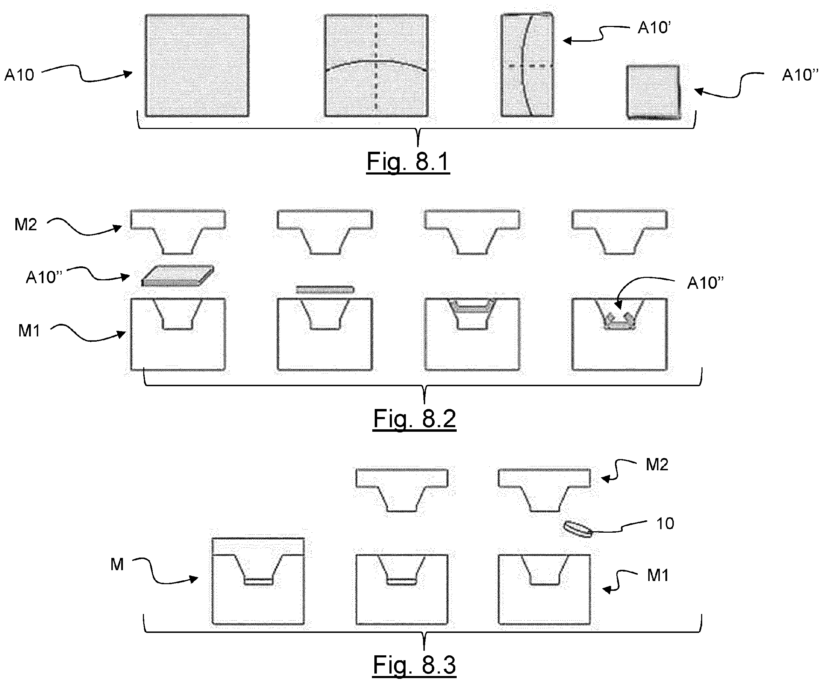

Figures 8.1-8.3 show a second forming method for obtaining the filter 10 according to another embodiment of the present invention. Differently from the first method, the aluminum mesh is provided, before forming, in a flat form. In particular, on the far left in the drawings, a portion of quadrangular mesh (A10) is shown, folded (A10') twice to obtain a quadrangular portion of mesh, with a smaller area than the initial portion, having several layers (A10"). The multilayer mesh portion is then formed by inserting it in a mold entirely similar to the one used to form the filter 10 according to the first variant described above (Fig. 8.2). Preferably, the female half-mold M1 has a cylindrical cavity with a smaller length than the length of the same component shown in Figure 5. In this way a pad filter 10 is obtained.

By way of example, the quadrangular mesh portion A10, before being folded, may be square in shape and have a side dimension of 100-200 mm. Preferably, a side of 150 mm. According to this embodiment, at the end of the forming process described above, a pad filter 10 with diameter of about 50-60 mm is obtained.

According to a second aspect, the present invention relates to the use of a filter made of anodized metal, as described above, for removing particles and/or microorganisms from fluids.

The filter according to the present invention can be used in a vast range of applications, and more particularly in all those situations where a fluid, such as water or air, can be made to pass actively or passively through a filter, so as to obtain advantageously a mechanical filtering action and at the same time a significant decrease in the microorganisms present in the fluid.

For example, the filter according to the present invention may be used in air conditioning systems, in particular those of public buildings such as schools or hospitals, to avoid the spread of more or less common pathogenic agents such as the influenza virus, Legionella, Staphylococcus aureus, etc.

In the same way, the present filter may be used in the air recirculation systems provided in means of transport. Particularly useful is the application of the present filter in vehicles such as buses, trains, coaches, etc. where a high concentration of pathogenic agents is typically present.

Finally, the present filter may be used also in extraction systems, such as kitchen or laboratory extractor hoods, which subsequently return the purified air into circulation.

Alternative applications of the filter according to the present invention are those for the purification of water, for example in systems for the recirculation of sanitary water in private homes or public buildings, where the water tends to stagnate in pipes and/or in boilers, favoring the proliferation of bacteria.

Advantageously it has been established in experimental tests that the filter according to the present invention has a high wear resistance, superior anti-adherence performance, high heat refractivity and heat conductivity, and high thermodynamic efficiency.

### EXPERIMENTAL PART

In order to assess the capacity of the filter according to the present invention for the abatement of airborne pollutants, a filter obtained as shown in Figure 8 was mounted at the end of the outflow of an extraction and recirculation motor and measurements of the total bacterial count (TBC) were carried out by means of a microbiological air sampler of the Surface Air System (SAS) type.

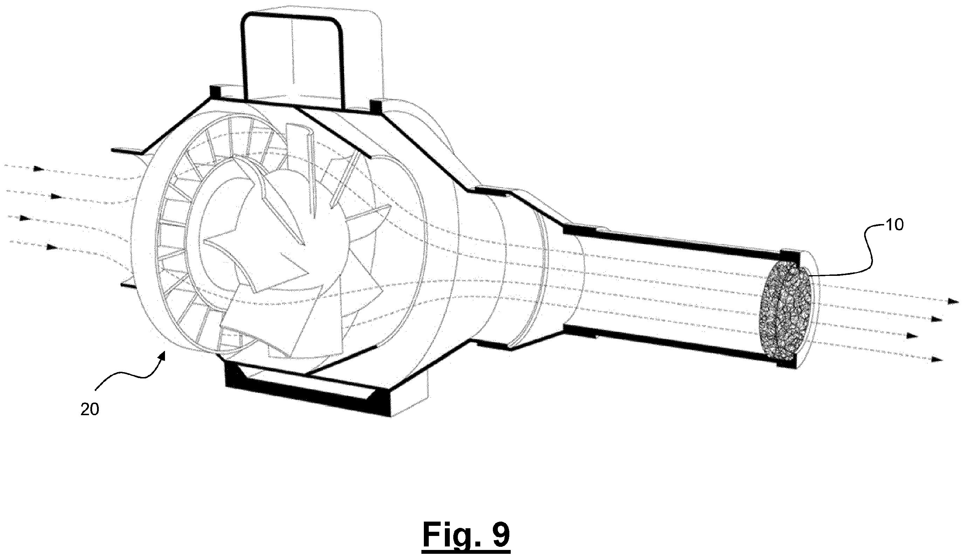

Figure 9 shows, partially cross-sectioned, the air extraction and recirculation motor 20 fitted with pad filter 10 according to the present invention.

Sampling was carried out in a closed chamber with volume of approximately 5 m³ (Example 1) and in an open space with volume of approximately 105 m³ (Example 2).

### EXAMPLE 1: domestic environment

A real domestic environment with volume of about 5 m³ was polluted by positioning inside it a tray containing animal manure. The polluting source was placed on the floor in a central position and left inside the room throughout the test. All the samples were taken at a height of 1 meter from the floor, by aspirating a volume of 1000 liters using the SAS (Surface Air System).

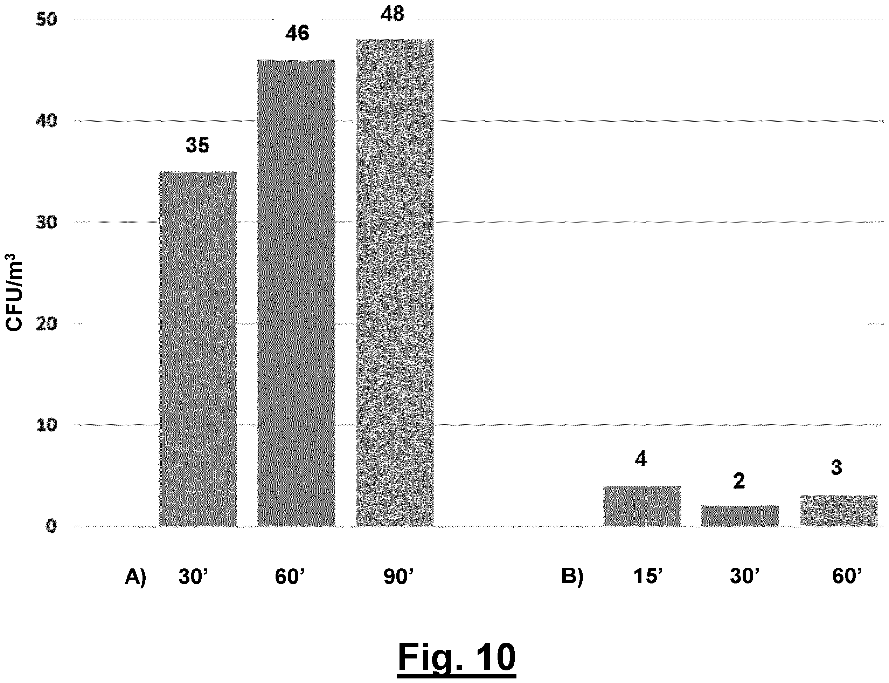

Figure 10 gives the results of the total bacterial count, expressed in CFU/m³, detected by the SAS sampler in the absence of an air extraction and recirculation motor equipped with the filter according to the invention (samples A, taken 30, 60 and 90 minutes after positioning of the polluting source) or in the presence of such a motor (samples B, taken 15, 30 and 60 minutes after positioning of the polluting source and starting of the air extraction and recirculation motor).

The results in Figure 10 clearly show a significant reduction in the bacterial count obtained using the filter according to the invention: in particular, it can be seen how after 30 and 60 minutes the total bacterial count is at least 15 times lower when the filter according to the invention is present.

### EXAMPLE 2: work environment

A second operational test was carried out in a real work environment, i.e. an office of about 100 m³ occupied by 4 people. The samples were taken by placing the air extraction and recirculation motor equipped with the filter according to the invention and SAS sampler in two different positions:
1) Air recirculation motor equipped with the filter according to the invention placed in a corner of the room and SAS sampler placed centrally at a height of 1 meter from the floor;
2) Air recirculation motor equipped with the filter according to the invention placed centrally, conveying the outflow towards the SAS sampler also placed centrally at a height of 1 meter from the floor.

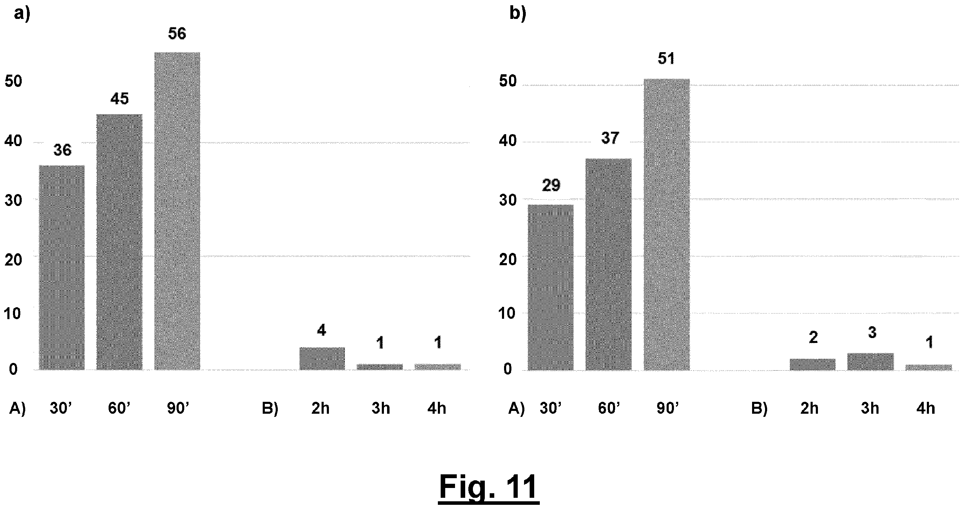

Figures 11a-11b show the results of the total bacterial count, expressed in CFU/m³, detected by the SAS sampler, respectively placed in position 1) or 2) as above, in the absence of an air extraction and recirculation motor equipped with the filter according to the invention (samples A, taken 30, 60 and 90 minutes after positioning of the polluting source) or in the presence of such a motor (samples B, taken 2, 3 and 4 hours after positioning of the polluting source and starting of the air extraction and recirculation motor).

In this case too, the results in Figures 11a-11b show a significant reduction in the bacterial count obtained using the filter according to the invention.

## Claims

1. A filter (10) made of anodized metal, wherein said metal comprises a superficial porous layer of an oxide of said metal comprising at least one antimicrobial substance, wherein said filter (10) comprises a plurality of thread-like elements of said anodized metal, at least partially in non-permanent contact with each other, randomly deformed to form a plurality of non-linear pathways.

2. The filter (10) according to claim 1, wherein said metal is aluminum or aluminum alloy.

3. The filter (10) according to claim 2, wherein said metal is aluminum.

4. The filter (10) according to any one of the preceding claims, wherein said antimicrobial substance consists of silver ions.

5. The filter (10) according to any one of the preceding claims, wherein said thread-like elements are present in the form of woven elements.

6. The filter (10) according to claim 5, wherein said woven elements are sections of metallic mesh (A30, A50, A90, A150).

7. The filter (10) according to claim 5 or 6, wherein said woven elements have a flat or tubular form.

8. The filter (10) according to any one of the preceding claims, wherein said thread-like elements are deformed by means of pressing (M).

9. The filter (10) according to any one of the preceding claims, wherein said superficial porous layer is obtained on the finished filter, before or after pressing.

10. The filter (10) according to any one of the preceding claims, wherein said superficial porous layer further comprises a dye.

11. The filter (10) according to any one of the preceding claims, wherein said superficial porous layer is at least partially sealed.

12. Use of a filter (10) according to any one of the claims 1 to 11 for removing particles and/or microorganisms from fluids.
